# EUROPEAN PATENT APPLICATION

(11) **EP 1 245 176 A2**
(43) Date of publication of application: **02.10.2002**
(21) Application number: 01204134.9
(22) Date of filing: 29.10.2001
(51) Int. Cl.: A47J 36/26, H05B 3/58

(54) **Self regulated heater shaped like a band to be removably fixed particularly on containers for substances requiring suitable operating temperatures**

(30) Priority: 30.10.2000 IT PN000068
(71) Applicant: Borghese Renato, 33085 Maniago (PN) (IT)
(72) Inventor: Borghese, Renato, 33085 Maniago (PN) (IT)
(74) Representative: Da Riva, Ermanno

(57) **Abstract**

Electrical self thermoregulated heater composed of a band shaped casing(1) on which is placed longitudinally a suitable quantity of parts(14) of a heating and self thermoregulating cable, which are parallelly interconnected as well as connected to an electrical feeding cable(20); suitable longitudinal(30-31) and transversal(32) sewings fix all the components in their respective position. A suitable layer of insulating material(15) is inserted between the heating elements(14) and the strip(12) of the band(1) which in the application is placed towards the outside.

Connection means(41-42-43) of the ending portions of the said band(1) are foreseen to fix it removably on the container to which it is applied.

## Description

The present invention relates to an electric heating device shaped like a band that can be closely wound and removably fixed particularly on the outer walls of the containers holding substances which require suitable operating temperatures.

Obviously this device will be used when the ambient temperature is low and so the substance inside of the container has a temperature which is lower than the minimum operating temperature.

The band forming the said heating device basically comprises a casing in suitable flexible material in which is placed longitudinally a suitable quantity of parts of a particular kind of cable or better of a heating ribbon of known type which generates an electrical conductance which varies in opposite manner with respect to the changes of the reached temperature, so much that it practically assumes the zero value when the characteristic maximum temperature of the used heating cable is reached.

The parts of the said heating cable are parallelly interconnected as well as connected to a cable for their electrical feeding. Furthermore they are fixed by means of a layer of insulating material placed between them and the strip of the band that, when applied to the container to be heated, is placed on the outside, thanks to sewings or other fixing means. In practice, the said heating and self regulating cable is the same as the one used in the heated container subject of the request PN2000A000029 of the same owner but the said container can be used limitedly to heat and maintain at a constant highest operating temperature the substances contained in vessels of limited sizes that can be placed in the inner space of its tank.

Furthermore the same substances that need to be heated at a suitable operating temperature are often contained in various vessels such as tins, pots, drums, cans, barrels and similar which are too big to be placed inside of the above mentioned heated container.

In this case, if the substance contained in the said vessels that cannot be placed inside of the said heated container, needs to be heated, the heating operation will be carried out by unsuitable and irrational means, for instance by dipping the vessel in boiling water or placing it over radiators, electric stoves or even directly licking it by the flames of welding torches as well as burners of various types.

Clearly all the aforementioned systems are irrational as well as very dangerous. In fact, if by mistake, the temperature of the substances becomes higher than the allowable one, there can be an explosion which can cause particularly serious damages or even terrible ones.

It is the aim of the present invention to overcome the above stated dangers and drawbacks by providing the heater which is the object of the present invention. The heater comprises principally a flexible casing shaped like a band inside of which are placed heating elements consisting of parts of self regulating heating cable already mentioned connected to a cable for electrical feeding. The said heating band can be applied to the outer surface of the container that is to be heated and fixed to it thanks to suitable blocking means.

From what stated and described, the realization as well as the application of the said electrical band shaped heater is easy and economical and its use can vary very much but still giving an absolute and total safety.

In order to better understand the features and advantages attainable by the electrical heater forming the object of the present invention, this heater is hereinafter described, by way of a not limitative example only, and with reference to the accompanying drawing, wherein:
- the figure 1 is the band forming the said electrical heater with a side view partially split near its two ending portions
- the figure 2 is a cross-sectional view according to the line I-I of fig. 1
- the figure 3 shows in detail with an enlarged view the two split parts near the two extremities of the band as shown on fig. 1
- the figure 4 is a perspective view of the electrical heater as it could be used.

In the above mentioned figures, the common items are marked with the same reference numerals.

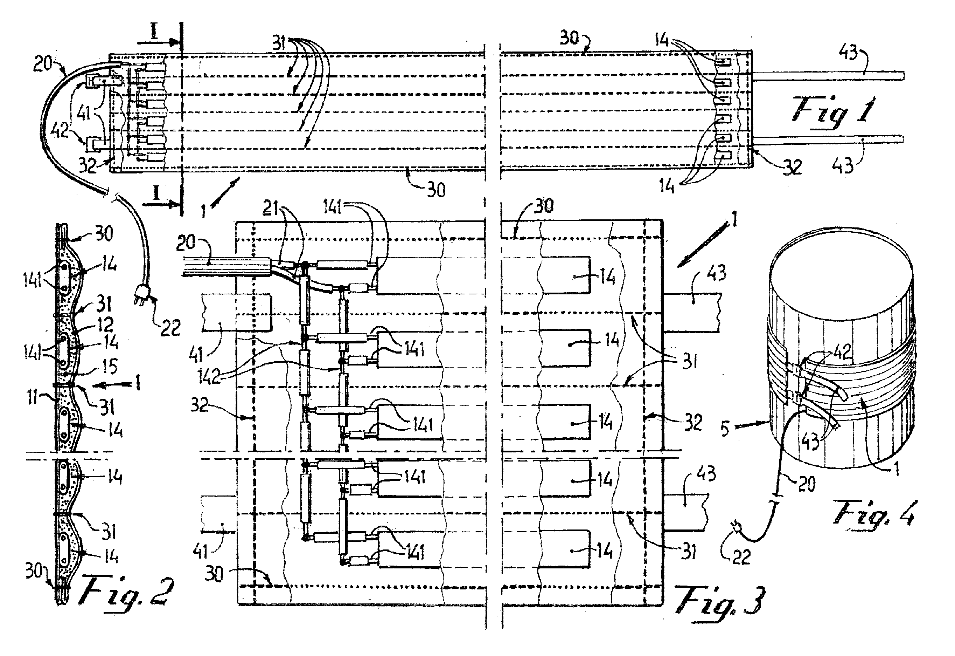

As it can be seen from figures 1, 2 and 3 that show in detail the whole structure of the electrical heater object of the present invention, the said heater comprises principally a casing formed by two strips in suitable flexible materials such as fabrics in natural or synthetic fibres which have the characteristic of resisting to wear and to the heat produced by the hereinafter described heating elements.

More precisely, a first strip 11 that in the application is placed on the surface of the container to be heated and the second strip 12 is placed on the external side(see figure 2).

The said strips 11 and 12 are mutually fixed along the longitudinal edges by means of suitable sewings 30 creating practically a band 1 internally hollow.

In the dead-air space inside of band 1, closely applied to the surface of the internal part of the said strip 11, are placed longitudinally and between them parallelly equidistant some parts 14 of the said heating self regulating band.

Between the parts of the inner surface of strip 11 not covered with the pieces 14 of the said heating self regulating band and the inner surfaces of these pieces, on the one side and the opposed inner surface of strip 12 on the other side, is inserted a suitable thermoinsulating material 15 which obviously resists to the highest temperature reachable by the said cable parts 14(see figure 2).

As it can be seen from figure 1 and more clearly from figure 3, the parts 14 of heating ribbon are simply cut off at one of their ending portions, precisely the one that in figure 3 is placed on the right, while at the other, the copper wires 141 placed along the sides of the band 14 and dipped in the thermovariable material at electrical conductance, which forms it, protrude in some suitable relative segments that are alternately connected to two connection cables 142, which are connected to respective internal cables 21 of the electrical feeding cable 20 which is provided with a common electric plug 22 at its free end.

The parts 14 of the heating cable are therefore parallelly interconnected.

Naturally the said segments 141 of the copper wires protruding from the parts 14 of the heating ribbon and the segments of the connection cables 142, will be opportunely coated with suitable electrically insulated sleeves and if necessary they will have a further mutual insulation as well as outwards with different suitable systems already known and this obviously to avoid improper contacts between the said cables(141-142) with consequent shortcircuits and to avoid each and every dispersion towards the outside which is obviously very dangerous.

At this point further longitudinal sewings 31 are made along the median area between two adjacent parts of the heating ribbon 14 obtaining in this way the fixing in the required position of the single parts(14) as well as of the insulating material layer(15) which covers one of their sides.

Finally, along the transversal edges of the two ending portions of band 1 further transversal sewings 32 are made that close the whole thing fixing at the same time, on one side(the one on the left on figures 1 and 3) two short segments of ribbon 41 which fix at their ends suitable buckles 42, and on the other side(the one on the right on figures 1 and 3) two further segments of ribbon making respective belts 43 with a certain length.

After the detailed description of the structure and execution of the said electrical heater we will now describe its practical use.

Referring to figure 4 which, as told before, shows a possible application, we can see that the band 1, forming the said self-regulated electrical heater, is closely wound round the outer surface of a cylindrical container 5 with the surface of its strip 11, so that the parts 14 adhere at their most to the surface to be heated reaching in this way an optimal thermal transmission . The band 1 will therefore be fixed in the required position introducing the belts 43 in the buckles 42 and pulling them until the desired fixing position is reached.

At that point, the electrical plug 22 is inserted in a socket so that the parts 14 of heating ribbon might be fed by means of the cable 20.

These parts(14) will get warm and the heat they generate is transmitted through the thin strip 11 to the surface of the vessel 5 and hence to the substance it contains. In view of the characteristics of the said heating ribbons(14), the heating will go on and when the highest operation temperature will be reached according to the chosen type of heating ribbon, its conductance will cancel out, interrupting automatically the heating.

Obviously the dimensions of the band 1, the type of heating band(14), the quantity and the length of the cable parts 14 obtained from the said heating band, can widely vary and this obviously according to the dimensions of the vessel on which it is applied but also to the characteristics of the substance contained in the said vessel 5.

Moreover, it is pointed out that a controlled shutter device can be added to the described electrical heater in order to obtain a total feeding of all the heating elements 14 or of a progressively decreasing quantity of these elements(14) getting in this way a further utility which can be advantageous in other applications.

From what stated and described, the peculiar characteristics of the above mentioned electrical heater which forms the object of the present invention as well as its important advantages are clear and obvious. These characteristics and advantages are hereafter summed up:
a)its realization is easy
b)it does not require the use of any temperature control device, such as electromechanical, electronic, thermoelectronic thermostates, which are subject to failure and therefore could create dangerous situations
c)its relevant production cost is very limited
d)since the structure and the dimensions can widely vary, it can be applied to various
types of containers of very different shapes and dimensions
e)its particularly simple structure and the absence of more or less complex components
make its application more safe and reliable than any other similar solution
f)moreover, always due to its particular structure, it may also be used in many other fields, for instance in sports, to make the preheating operation of the racing cars tyres or for therapeutic use, to warm up some parts of the body for a real thermotherapy

In conclusion, it is to be pointed out that modifications and variations may be made to the electrical heater. For instance, the sewings 30, 31, 32 may be replaced by completely equivalent linear thermoweldings using suitable thermowelding fabrics, the fixing system with belts 43 and buckles 42 may be obtained with many other means of a known type.

It is well understood that in addition to the possible variations already mentioned, others may be made to the electrical heater forming the object of the present invention without departing however from the scope defined by the above description and the following claims with reference to the accompanying drawing and thence from the protection extent of the present industrial invention.

## Claims

1. Self thermoregulating electrical heater shaped like a band to be removably fixed particularly on containers holding substances requiring suitable operating temperatures, **characterized in that** the said band(1), which defines it externally, comprises two rectangular strips(11-12), exactly the same, made out of suitable flexible materials, being connected along their longitudinal edges by means of sewings(30) creating a casing in which, in adherence with the inner surface of the strip(11) which in the use will be closely applied to the outer surface of the vessel(5) containing the substance to heat, is longitudinally and parallelly placed a quantity of heating cable parts(14) of a known thermoregulating type, between the said cable parts(14) and the opposite internal surface of the other strip(12) is placed an appropriate layer(15) of a suitable insulating material, the two cables(141)protruding from one end of the said heating ribbons(14) being furthermore alternately and parallelly connected to the connection cables(142) which are connected to the internal cables(21)ofthe electrical feeding cable protruding from the said band(1), an appropriate quantity of longitudinal sewings(31)made in the area between the two adjacent heating bands(14) and two transversal sewings(32) made on the edges of the two ending portions of the said band(1), complete the whole fixing in the foreseen positions the single components, the connecting means(41-42-43)of the extremities of the said band(1), which removably fix on the vessel(5)on which it is applied, since they are foreseen.

2. Heater according to the claim 1, **characterized in that** the rectangular strips(11-12) forming the casing of the said band(1) are made out of suitable fabrics or equivalent

3. Heater according to the claim 1, **characterized in that** the single heating bands(14) can be connected to an appropriate controlled shutter device in order to allow a complete or partial connection.
The whole as substantially described and claimed, as well as for the scopes defined.
